# EUROPÄISCHE PATENTSCHRIFT

(11) **EP 1 237 388 B1**
(45) Veröffentlichungstag und Bekanntmachung des Hinweises auf die Patenterteilung: **02.01.2004**
(21) Anmeldenummer: 01104899.8
(22) Anmeldetag: 28.02.2001
(51) Int. Cl.: H04Q 7/38

(54) **Verfahren zur Durchführung einer Übergabeprozedur in einem Funkkommunikationssystem mit mehreren Sende/Empfangseinheiten**
Process for carrying out a handover procedure in a radio communication system with plural transmit/receive units
Procédé pour la mise en oeuvre d'une procédure de transfert dans un système de communication radio avec plusieures unités d'émission/réception

(43) Veröffentlichungstag der Anmeldung: 04.09.2002
(73) Patentinhaber: SIEMENS AKTIENGESELLSCHAFT, 80333 München (DE)
(72) Erfinder: Mayr, Bernhard, 82396 Paehl (DE)

(56) Entgegenhaltungen:
- EP-A- 0 544 457
- EP-A- 0 848 567
- WO-A-98/15150
- US-A- 6 078 813

## Beschreibung

Funkkommunikationssysteme dienen der Übertragung von Informationen, Sprache oder Daten, mit Hilfe von elektromagnetischen Wellen über eine Funkschnittstelle zwischen einer sendenden und einer empfangenden Funkstation. Ein Beispiel für ein Funkkommunikationssystem ist das bekannte GSM-Mobilfunknetz, dessen Architektur zum Beispiel in B. Walke, "Mobilfunknetze und ihre Protokolle", Band 1, Teubner Verlag Stuttgart, 1998, Seite 139 bis 151 beschrieben ist. Dabei ist zur Übertragung eines Teilnehmersignals jeweils ein durch einen schmalbandigen Frequenzbereich und einen Zeitschlitz gebildeter Kanal vorgesehen. Da sich ein Teilnehmersignal in einem Kanal in Frequenz und Zeit von den übrigen Teilnehmersignalen unterscheidet, kann die empfangende Funkstation eine Detektion der Daten des Teilnehmersignals vornehmen. In neueren Funkkommunikationssystemen, wie zum Beispiel dem UMTS System, werden die einzelnen Teilnehmer darüber hinaus durch unterschiedliche Spreizcodes unterschieden.

Ein Funkkommunikationssystem, zum Beispiel ein GSM-Mobilfunknetz, umfasst eine Vielzahl von Mobilvermittlungsstellen, die untereinander vernetzt sind, beziehungsweise die den Zugang zu einem Festnetz herstellen. Ferner sind die Mobilvermittlungsstellen mit jeweils einer oder mehreren Basisstationssteuerungen verbunden. Die Basisstationssteuerung ermöglicht eine Verbindung zu mindestens einer Basisstation und nimmt die Verwaltung der funktechnischen Ressourcen der angeschlossenen Basisstationen vor. Eine solche Basisstation ist eine Sende/Empfangseinheit, die über eine Funkschnittstelle, auch Luftschnittstelle Interface genannt, eine Funkverbindung zu Mobilstationen aufbauen kann.

Ein Gebiet, das von einem Funkkommunikationssystem abgedeckt wird, wird in einzelne Funkzonen, die auch als Zellen bezeichnet werden, aufgeteilt. Eine Zelle wird dabei von einer der Basisstationen bedient, über die Funkverbindungen von Mobilstationen, die sich in dieser Zelle aufhalten, aufgebaut werden. Um Störungen von Funkverbindungen in benachbarten Zellen zu vermeiden, wird jeder Zelle eine Untermenge von physikalischen Kanälen, die in dem Funkkommunikationssystem zur Verfügung stehen, zugewiesen. Direkt benachbarte Zellen verwenden unterschiedliche physikalische Kanäle, über die Funkverbindungen zwischen einer Mobilstation und der Basisstation aufgebaut werden. Erst in einem gewissen Abstand zweier Zellen zueinander werden physikalische Kanäle erneut verwendet.

Bewegt sich eine Mobilstation aus dem Gebiet einer Zelle in eine andere Zelle, so erfolgt bei einer laufenden Funkverbindung eine automatische Übergabeprozedur (handover genannt), so dass eine aktive Funkverbindung auch über Zellgrenzen hinweg aufrechterhalten werden kann. Bei der Übergabeprozedur wird die Funkverbindung zwischen der Mobilstation und dem Funkkommunikationssystem, die über eine erste Sende/Empfangseinheit aufgebaut ist, auf eine zweite Sende/Empfangseinheit umgeschaltet. Die Notwendigkeit für eine derartige Übergabeprozedur wird vom Funkkommunikationsystem erkannt.

Ein derartiges Verfahren zur Durchführung einer Übergabeprozedur in einem Funkkommunikationssystem ist z.B. in der WO 98/15150 offenbart.

Es hat sich gezeigt, dass es im Zusammenhang mit Übergabeprozeduren zu Überlastmeldungen des Operations- und Wartungszentrums bezüglich der Verbindung zwischen der Basisstation und der Basisstationssteuerung sowie zu einer Belegung aller Kanäle, die zum Aufbau neuer Funkverbindungen über eine Basisstation benötigt werden, kommen kann. Letzteres führt dazu, dass Anfragen für einen Aufbau einer neuen Funkverbindung zurückgewiesen werden.

Der Erfindung liegt das Problem zugrunde, ein Verfahren zur Durchführung einer Übergabeprozedur in einem Funkkommunikationssystem anzugeben, bei dem eine Überlastung des Funkkommunikationssystems vermieden wird.

Dieses Problem wird erfindungsgemäß gelöst durch ein Verfahren gemäß Anspruch 1. Weitere Ausgestaltungen der Erfindung gehen aus den Unteransprüchen hervor.

Das Verfahren ist in allen Funkkommunikationssystemen anwendbar, die zellular aufgebaut sind, und in denen eine Wiederverwendung physikalischer Kanäle vorgesehen ist. Das Verfahren ist insbesondere in Funkkommunikationssystemen einsetzbar, die entsprechend oder ähnlich dem GSM-Standard aufgebaut sind.

Zu dem erfindungsgemäßen Verfahren haben die folgenden Überlegungen geführt: Zum Einleiten einer Übergabeprozedur von einer ersten Sende/Empfangseinheit auf eine zweite Sende/Empfangseinheit sendet das Funkkommunikationssystem der Mobilstation eine Nachricht, die neben dem Befehl, eine Übergabeprozedur vorzunehmen, eine Information über die zweite Sende/Empfangseinheit enthält, auf die die Funkverbindung umgeschaltet werden soll, und eine Übergabeprozedurkennung enthält. Gleichzeitig übermittelt das Funkkommunikationssystem die Übergabeprozedurkennung der zweiten Sende/Empfangseinheit, so dass diese die Übergabeprozedur erwartet. Nachfolgend sendet die Mobilstation eine Übergabesignalisierungsnachricht, vielfach handover access message genannt, an die zweite Sende/Empfangseinheit. In vielen Funkkommunikationssystemen wird diese Übergabesignalisierungsnachricht über denselben physikalischen Kanal, der zum Beispiel durch einen Frequenzbereich und einen Basisstationsfarbcode (base station colour code BCC) definiert wird, gesendet, über den auch Signalisierungen zur Kanalanforderung (sogenannter channel request) beim Aufbau einer neuen Funkverbindung zwischen einer Mobilstation und dem Funkkommunikationssystem gesendet werden. Dieses ist unter anderem der Fall bei Funkkommunikationssystemen, die entsprechend dem GSM-Standard aufgebaut sind.

Das Format der Übergabeprozedurkennung in einer Übergabesignalisierungsnachricht (handover access message) entspricht inhaltlich dem Format eines Kennwortes in einer Signalisierungsnachricht zur Kanalanforderung (channel request), da es sich in beiden Fällen um ein acht Bit Wort handelt. Im Fall einer Übergabesignalisierungsnachricht enthält das Wort einen Zufallswert zwischen 0 und 255. Im Fall einer Signalisierungsnachricht zur Kanalanforderung (channel request) enthält dieses acht Bit Wort einen Wert zur Identifizierung der Verbindung (establishment cause) und eine Zufallszahlkennung (random reference), so dass es feste Bedeutungen für das acht Bit Wort gibt. Es sind dabei nur bestimmte Werte für das acht Bit Wort in einer Signalisierungsnachricht zur Kanalanforderung vorgesehen.

Wird bei einer Übergabeprozedur die Übergabesignalisierungsnachricht von einer Sende/Empfängereinheit des Funkkommunikationssystems empfangen, die an der Übergabeprozedur nicht beteiligt ist, der jedoch derselbe physikalische Kanal zum Beispiel als Rundfunkkanal (broadcast channel BCCH) zugeordnet ist, wie der zweiten Sende/Empfängereinheit, auf die die aktive Funkverbindung umgeschaltet werden soll, so interpretiert diese andere Sende/Empfängereinheit die Übergabesignalisierungsnachricht als Signalisierungsnachricht für eine Kanalanforderung (channel request). Sie startet daraufhin eine in dem Funkkommunikationssystem vorgesehene Prozedur zum Aufbau einer Funkverbindung. Diese Prozedur hat zunächst einen Signalisierungsverkehr zur Folge. In Funkkommunikationssystemen entsprechend dem GSM-Standard wird von der Sende/Empfangseinheit bei der Basisstationssteuerung ein Kanal angefordert. Es erfolgt die Kanalaktivierung (channel activation) und das Quittieren der Kanalaktivierung (channel activation acknowledge). Daraufhin wird der Kanal zugewiesen (immediate assignment). Stellt das Funkkommunikationssystem fest, dass nach drei Sekunden keine Funkverbindung über den Kanal zustandekommt, so wird der Kanal wieder freigegeben.

Mit zunehmender Auslastung des Funkkommunikationssystems und mit abnehmender Größe der Zellen im Funkkommunikationssystem führt dieses Phänomen zu einer Überlastung der Verbindung zwischen Basisstation und Basisstationssteuerung und der ohnehin knappen Funkkanäle, die zum Aufbau neuer Funkverbindungen zur Verfügung stehen und die auch als Stand alone Control Channel (SDCCH) bezeichnet werden, durch derartige vom Funkkommunikationssystem irrtümlich eingeleiteten Verbindungsaufbauversuche.

In dem erfindungsgemäßen Verfahren zur Durchführung einer Übergabeprozedur in einem Funkkommunikationssystem mit einer ersten Sende/Empfangseinheit, einer zweiten Sende-/Empfangseinheit und weiteren Sende-/Empfangseinheiten wird eine Funkverbindung zwischen einer Mobilstation und dem Funkkommunikationssystem, die über die erste Sende/Empfangseinheit aufgebaut ist, auf die zweite Sende/Empfangseinheit umgeschaltet. Zum Aufbau einer Verbindung zu der zweiten Sende/Empfangseinheit sendet die Mobilstation an die zweite Sende/Empfangseinheit eine Übergabesignalisierungsnachricht, die als Übergabeprozedurkennung ein Codewort enthält, dessen Wert einem Übergabecode entspricht. Der Übergabecode ist in dem Funkkommunikationssystem für Übergabeprozeduren reserviert. Anhand des Übergabecodes erkennen die weiteren Sende/Empfangseinheiten des Funkkommunikationssystems, die die Übergabesignalisierungsnachricht empfangen, die Übergabesignalisierungsnachricht als Übergabesignalisierungsnachricht. Dadurch wird vermieden, dass die weiteren Sende/Empfangseinheiten die Ubergabesignalisierungsnachricht irrtümlich als Signalisierungsnachricht für eine Kanalanforderung (Channel request)erkennen und eine Prozedur zum Aufbau einer neuen Funkverbindung auslösen, die die Funkressourcen des Funkkommunikationssystems unnötig belastet.

In einem Funkkommunikationssystem entsprechend dem GSM-Standard oder einem ähnlichen Standard entspricht die Übergabesignalisierungsnachricht einer Handover Access Message.

Es liegt im Rahmen der Erfindung, den Übergabecode in den Sende/Empfangseinheiten zu hinterlegen. In jeder der weiteren Sende/Empfangseinheiten, die eine Signalisierungsnachricht mit einem Codewort empfängt, wird der Wert des Codeworts mit dem Übergabecode verglichen. Im Fall der Übereinstimmung zwischen dem Wert des Codeworts und dem Übergabecode wird das Codewort als Übergabeprozedurkennung und damit die Signalisierungsnachricht als Übergabesignalisierungsnachricht erkannt.

Vorzugsweise umfasst der Übergabecode mehrere Werte. Der Wert eines Codeworts einer Signalisierungsnachricht wird in diesem Fall mit den einzelnen Werten des Übergabecodes verglichen. Bei Übereinstimmung des Wertes des Codeworts mit einem der Werte des Übergabecodes wird das Codewort als Übergabeprozedurkennung und die Signalisierungsnachricht als Übergabesignalisierungsnachricht erkannt. Durch Vorsehen mehrerer Werte für den Übergabecode wird die Stabilität des Systems weiter verbessert.

Der Wert/die Werte für das Codewort als Übergabeprozedurkennung werden so gewählt, dass die Zuordnung eindeutig ist. D.h. die gewählten Werte des Codewortes werden in dem Funkkommunikationssystem nicht anderweitig verwendet.

Bei Einsatz des Verfahrens in einem Funkkommunikationssystem, in dem die Übergabesignalisierungsnachrichten über einen physikalischen Kanal gesendet werden, über den auch Signalisierungsnachrichten zum Aufbau einer neuen Funkverbindung mit dem Funkkommunikationssystem gesendet werden, liegt es im Rahmen der Erfindung, dass eine der weiteren Sende/Empfangseinheiten, die in dem physikalischen Kanal eine Signalisierungsnachricht mit einem Codewort empfängt, anhand einer U-berprüfung der Übereinstimmung des Codeworts mit dem Übergabecode entscheidet, ob die empfangene Signalisierungsnachricht als Übergabesignalisierungsnachricht zu werten ist oder nicht. Vorzugsweise verwirft die weitere Sende/Empfangseinheit eine empfangene Signalisierungsnachricht, sobald eine Übereinstimmung des Codeworts mit dem Übergabecode festgestellt wurde. Auf diese Weise wird das Funkkommunikationssystem optimal vor einer Belastung durch derartige Signalisierungsnachrichten geschützt.

Wird das Verfahren in einem Funkkommunikationssystem entsprechend oder ähnlich dem GSM-Standard eingesetzt, so liegt es im Rahmen der Erfindung, dass die erste Sende/Empfangseinheit, die zweite Sende/Empfangseinheit und/oder die weiteren Sende/Empfangseinheiten Basisstationen sind.

Im Folgenden wird ein Ausführungsbeispiel der Erfindung anhand einer Figur näher erläutert.

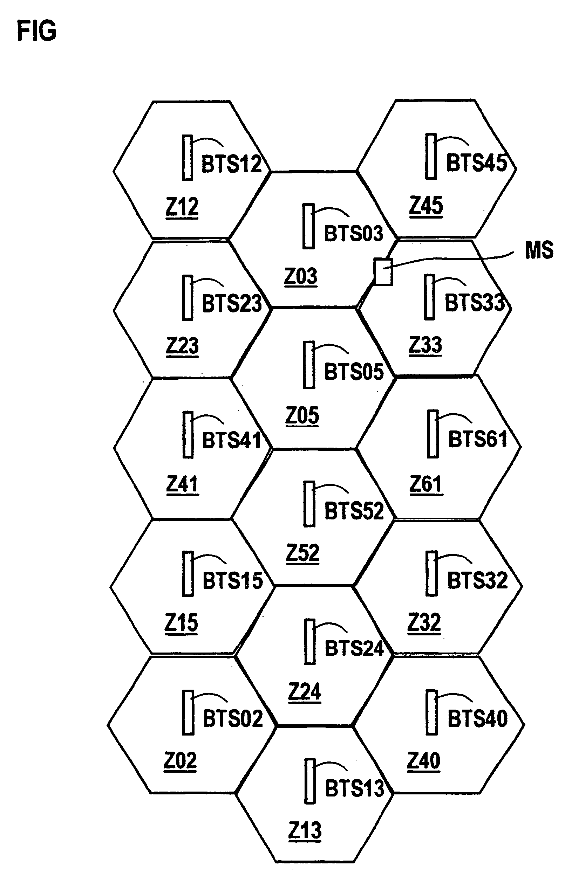

Die Figur zeigt mehrere Zellen eines zellularen Mobilfunksystems.

In einem zellularen Funkkommunikationssystem sind eine Vielzahl von sechseckigen Zellen Zim mit jeweils einer Basisstation BTSim vorgesehen. Jeder der Zellen Zim ist dabei ein Rundfunkkanal (broad casting channel) BCCH mit einer Frequenz Fi, i=0,1,2...6, zugewiesen. Zur weiteren Unterscheidbarkeit der Zellen Zim ist jeder von ihnen ein Basisstationsfarbcode (base station colour code BCC) zugeordnet, dem ein Wert m, m=0,1,2...5, zugeordnet ist.

Erkennt das Funkkommunikationssystem, dass für eine Verbindung zwischen einer Mobilstation MS und der Basisstation BTS03 die Bedingungen zur Durchführung einer Übergabeprozedur (handover) erfüllt sind, da sich die Mobilstation MS aus der Zelle Z03 in die Zelle Z33 bewegt hat, so erhält die Mobilstation MS vom Funkkommunikationssystem den Befehl zur Durchführung der Übergabeprozedur von der Basisstation BTS03 zur Basisstation BTS33, in der der Mobilstation MS ein Verkehrskanal mit einer Frequenz F1 zugewiesen wird. Daraufhin sendet die Mobilstation auf der Frequenz F1 eine Übergabesignalisierungsnachricht, die den Basisstationsfarbcode BCC=3 der Basisstation BTS33 und die Übergabeprozedurkennung, die einen Übergabecode aufweist, enthält. Die Übergabesignalisierungsnachricht kann von allen Zellen empfangen werden, denen der physikalische Kanal mit der Frequenz F1 zugewiesen ist. Insbesondere die Zellen Z1m, denen der physikalische Kanal mit der Frequenz F1 als Rundfunkkanal (broadcasting channel BCCH) zugewiesen ist, können die Übergabesignalisierungsnachricht empfangen. Die Basisstation BTS13, der der physikalische Kanal mit der Frequenz F1 als Rundfunkkanal BCCH zugewiesen ist und der der Basisstationsfarbcode BCC=3, zugewiesen ist, empfängt die Übergabesignalisierungsnachricht und überprüft, ob das Codewort mit dem Übergabecode, der in der Basisstation gespeichert ist, übereinstimmt. Da dieses der Fall ist, erkennt die Basisstation BTS13, dass es sich bei dem Codewort um eine Übergabeprozedurkennung und bei der empfangenen Signalisierungsnachricht um eine Übergabesignalisierungsnachricht handelt, die sie nicht zu beachten hat. Die Übergabesignalisierungsnachricht wird daher in der Basisstation BTS13 verworfen.

Der Basisstation BTS33, auf die die Funkverbindung mit der Mobilstation MS umgeschaltet werden soll, liegt die Übergabeprozedurkennung, die vom Funkkommunikationssystem übermittelt wurde, vor. Daher führt sie die Übergabeprozedur nach Erhalt der Übergabesignalisierungsnachricht von der Mobilstation MS fort.

In dem Funkkommunikationssystem sind bestimmte Werte für den Ubergabecode reserviert. Das Format des Codeworts entspricht zwar dem Format des Codeworts in Signalisierungsnachrichten, mit denen eine Kanalanforderung zum Verbindungsaufbau (channel request) gestartet wird, der Wert des Übergabecodes wird jedoch beim Verbindungsaufbau für das Codewort nicht verwendet. Daher ist die Zuordnung des Übergabecodes zu Übergabesignalisierungsnachrichten eindeutig.

## Patentansprüche

1. Verfahren zur Durchführung einer Übergabeprozedur in einem Funkkommunikationssystem mit einer ersten Sende/Empfangseinheit, einer zweiten Sende/Empfangseinheit und weiteren Sende/Empfangseinheiten,
- bei dem eine Funkverbindung zwischen einer Mobilstation und dem Funkkommunikationssystem, die über die erste Sende/Empfangseinheit aufgebaut ist, auf die zweite Sende/Empfangseinheit umgeschaltet wird,
- bei dem die Mobilstation zum Aufbau einer Verbindung zu der zweiten Sende/Empfangseinheit eine Übergabesignalisierungsnachricht an die zweite Sende/Empfangseinheit sendet,
**dadurch gekennzeichnet, daß** die Übergabesignalisierungsnachricht ein Codewort als Übergabeprozedurkennung enthält, dessen Wert einem Übergabecode entspricht, der in dem Funkkommunikationssystem für Übergabeprozeduren reserviert ist,
- wobei die Mobilstation die Übergabesignalisierungsnachricht über einen physikalischen Kanal sendet, über den auch Signalisierungsnachrichten zum Aufbau einer Funkverbindung mit dem Funkkommunikationssystem gesendet werden,
- wobei eine der weiteren Sende/Empfangseinheiten, die in dem physikalischen Kanal eine Signalisierungsnachricht mit einem Codewort empfängt, anhand einer Überprüfung der Übereinstimmung des Codeworts mit dem Übergabecode entscheidet, ob die empfangene Signalisierungsnachricht als Übergabesignalisierungsnachricht zu werten ist oder nicht, und
- wobei die weiteren Sende/Empfangsstationen des Funkkommunikationssystems, die die Übergabesignalisierungsnachricht empfangen, diese anhand des Übergabecodes als Übergabesignalisierungsnachricht erkennen.

2. Verfahren nach Anspruch 1,
- bei dem in den Sende/Empfangseinheiten der Übergabecode hinterlegt ist,
- bei dem in jeder der weiteren Sende/Empfangseinheiten, die eine Signalisierungsnachricht mit einem Codewort empfängt, der Wert des Codeworts mit dem Übergabecode verglichen wird und im Fall der Übereinstimmung zwischen dem Wert des Codeworts und dem Übergabecode die Signalisierungsnachricht als Übergabesignalisierungsnachricht erkannt wird.

3. Verfahren nach Anspruch 1 oder 2,
- bei dem der Übergabecode mehrere Werte umfasst,
- bei dem der Wert eines Codeworts einer Signalisierungsnachricht mit den einzelnen Werten des Übergabecodes verglichen wird und die Signalisierungsnachricht bei Übereinstimmung des Wertes des Codeworts mit einem der Werte des Übergabecodes als Übergabesignalisierungsnachricht erkant wird.

4. Verfahren nach Anspruch 3,
- bei dem die Mobilstation von dem Funkkommunikationssystem einen Befehl zur Einleitung der Übergabeprozedur erhält, der eine Information über die zweite Sende/Empfangseinheit und die Übergabeprozedurkennung enthält,
- bei dem das Funkkommunikationssystem der zweiten Sende/Empfangseinheit eine Information über die Ubergabeprozedur übermittelt,
- bei dem weitere Sende/Empfangseinheiten, die die Übergabesignalisierungsnachricht der Mobilstation empfangen, eine Übereinstimmung des Codeworts mit dem Übergabecode überprüfen und bei Übereinstimmung des Codeworts mit dem Übergabecode die Übergabesignalisierungsnachricht verwerfen.

5. Verfahren nach einem der Ansprüche 1 bis4,
- bei dem die erste Sende/Empfangseinheit, die zweite Sende/Empfangseinheit und/oder die weiteren Sende/Empfangseinheiten Basisstationen sind.

## Claims

1. Method for carrying out a handover procedure in a radio communications system having a first transmitting/receiving unit, a second transmitting/receiving unit and further transmitting/receiving units,
- in which a radio link between a mobile station and the radio communications system, which is set up via the first transmitting/receiving unit, is switched to the second transmitting/receiving unit,
- in which the mobile station sends a handover signalling message to the second transmitting/receiving unit in order to set up a connection to the second transmitting/receiving unit,
**characterized in that** the handover signalling message contains a code word as the handover procedure identifier, whose value corresponds to a handover code which is reserved for handover procedures in the radio communications system,
- where the mobile station sends the handover signalling message via a physical channel, via which signalling messages for setting up a radio link to the radio communications system are also sent,
- where one of the further transmitting/receiving units, which receives a signalling message in the physical channel with a code word, decides on the basis of a check that the code word matches the handover code whether the received signalling message should or should not be regarded as a handover signalling message, and
- where the further transmitting/receiving stations in the radio communications system which receive the handover signalling message identify this as a handover signalling message on the basis of the handover code.

2. Method according to Claim 1,
- in which the handover code is stored in the transmitting/receiving units,
- in which the value of the code word is compared with the handover code in each of the further transmitting/receiving units which receives a signalling message with a code word and, if the value of the code word matches the handover code, the signalling message is identified as a handover signalling message.

3. Method according to Claim 1 or 2,
- in which the handover code comprises a number of values,
- in which the value of a code word for a signalling message is compared with the individual values of the handover code and, if the value of the code word matches one of the values of the handover code, the signalling message is identified as a handover signalling message.

4. Method according to Claim 3,
- in which the mobile station receives from the radio communications system a command to initiate the handover procedure, which command contains information about the second transmitting/receiving unit and the handover procedure identifier,
- in which the radio communications system transmits information about the handover procedure to the second transmitting/receiving unit, and
- in which further transmitting/receiving units which receive the handover signalling message of the mobile station check whether the code word matches the handover code and, if the code word matches the handover code, reject the handover signalling message.

5. Method according to one of Claims 1 to 4,
- in which the first transmitting/receiving unit, the second transmitting/receiving unit and/or the further transmitting/receiving units are base stations.

## Revendications

1. Procédé destiné à mettre en oeuvre une procédure de transfert dans un système de communication par radio ayant une première unité émettrice et réceptrice, une deuxième unité émettrice et réceptrice et d'autres unités émettrices et réceptrices,
- dans lequel une liaison radio entre un poste mobile et le système de communication par radio, qui a été établie par l'intermédiaire de la première unité émettrice et réceptrice, est commutée sur la deuxième unité émettrice et réceptrice,
- dans lequel le poste mobile envoie, pour l'établissement d'une liaison vers la deuxième unité émettrice et réceptrice, un message de signalisation d'un transfert à la deuxième unité émettrice et réceptrice,
**caractérisé par le fait que** le message de signalisation d'un transfert renferme, en tant qu'identification d'une procédure de transfert, un mot code dont la valeur correspond à un code de transfert, qui est réservé pour les procédures de transfert dans le système de communication par radio,
- le poste mobile envoyant le message de signalisation d'un transfert par l'intermédiaire d'un canal physique, sur lequel sont également envoyés des messages de signalisation destinés à l'établissement d'une liaison radio avec le système de communication par radio,
- l'une des autres unités émettrices et réceptrices, qui reçoit, sur le canal physique, un message de signalisation comportant un mot code, décidant, à l'aide d'une vérification de la concordance entre le mot code et le code de transfert, si le message de signalisation reçu est à considérer ou non comme message de signalisation d'un transfert et
- les autres unités émettrices et réceptrices du système de communication par radio, qui reçoivent le message de signalisation d'un transfert, reconnaissant celui-ci, à l'aide du code de transfert, comme message de signalisation d'un transfert.

2. Procédé selon la revendication 1
- dans lequel le code de transfert est mémorisé dans les unités émettrices et réceptrices,
- dans lequel, dans chacune des autres unités émettrices et réceptrices, qui reçoivent un message de signalisation renfermant un mot code, la valeur du mot code est comparée au code de transfert et, dans le cas de la concordance entre la valeur du mot code et le code de transfert, le message de signalisation est reconnu comme message de signalisation d'un transfert.

3. Procédé selon la revendication 1 ou 2
- dans lequel le code de transfert comprend plusieurs valeurs,
- dans lequel la valeur d'un mot code d'un message de signalisation est comparée aux différentes valeurs du code de transfert et le message de signalisation est reconnu comme message de signalisation d'un transfert lorsqu'il y a concordance entre la valeur du mot code et l'une des valeurs du code de transfert.

4. Procédé selon la revendication 3
- dans lequel le poste mobile reçoit du système de communication par radio une instruction destinée à initier la procédure de transfert, instruction qui renferme une information concernant la deuxième unité émettrice et réceptrice et l'identification de la procédure de transfert,
- dans lequel le système de communication par radio transmet à la deuxième unité émettrice et réceptrice une information concernant la procédure de transfert,
- dans lequel d'autres unités émettrices et réceptrices, qui reçoivent du poste mobile le message de signalisation d'un transfert, vérifient s'il y a concordance entre le mot code et le code de transfert et, dans le cas où il y a concordance entre le mot code et le code de transfert, rejettent le message de signalisation d'un transfert.

5. Procédé selon l'une des revendications 1 à 4
- dans lequel la première unité émettrice et réceptrice, la deuxième unité émettrice et réceptrice et/ou les autres unités émettrices et réceptrices sont des stations de base.
